# EUROPEAN PATENT SPECIFICATION

(11) **EP 2 263 395 B1**
(45) Date of publication and mention of the grant of the patent: **09.09.2015**
(21) Application number: 09703054.8
(22) Date of filing: 19.01.2009
(51) Int. Cl.: H04W 12/02, H04W 76/02, H04L 29/06, H04W 12/00, H04W 84/04, H04W 84/12, H04W 12/12

(54) **IMPROVING SECURITY IN TELECOMMUNICATIONS SYSTEMS**
VERBESSERUNG DER SICHERHEIT IN TELEKOMMUNIKATIONSSYSTEMEN
AMÉLIORATION DE SÉCURITÉ DANS DES SYSTÈMES DE TÉLÉCOMMUNICATION

(30) Priority: 17.01.2008 GB 0800779; 05.03.2008 EP 08380067
(43) Date of publication of application: 22.12.2010
(73) Proprietor: Vodafone Group PLC, Newbury Berkshire RG14 2FN (GB)
(72) Inventor: PUDNEY, Christopher, Newbury, Berkshire RG20 9EZ (GB); BABBAGE, Stephen, Newbury, Berkshire RG14 2FN (GB); GOMEZ, Alberto, E-28050 Madrid (ES); ARRANZ, Miguel, E-28050 Madrid (ES); KOEHLER, Robert, E-28050 Madrid (ES)
(74) Representative: Boult Wade Tennant
(86) International application number: PCT/GB2009/050034
(87) International publication number: WO 2009/090432

(56) References cited:
- EP-A- 1 835 656
- WO-A-2004/098112
- US-A1- 2005 102 517
- US-A1- 2005 152 281
- WEN-PING YING: "Key Hopping? ? A Security Enhancement Scheme for IEEE 802.11 WEP Standards" NEXTCOMM, February 2002 (2002-02), XP002547177 Retrieved from the Internet: URL:http://www.thehackademy.net/madchat/re seau/wireless/Key_Hopping.pdf>

## Description

The present invention relates to a method of improving security in a telecommunications network. The invention also relates to a corresponding telecommunications system.

Various schemes are known that provide some degree of security in communications between a device and a telecommunications network. For example, in many GSM cellular telecommunications networks the A5/1 algorithm is used to encrypt communications sent wirelessly between a mobile terminal and a base station.

The GSM encryption algorithm A5/1 has become known publicly and has some weaknesses. Attempts have been made to devise GSM eavesdropping equipment that breaks A5/1 and allows the attacker to listen to people's telephone calls.

To date this threat has been considered academic due to the high cost needed to implement the systems necessary to perform the attacks. The introduction of FPGA (Fully Programmable Gate Arrays) processing may decrease the cost to the point of translating academic analysis into a real and widely affordable eavesdropping.

The cryptanalysis by such eavesdropping equipment is not quite in real time. Instead, intercepted encrypted data has to be recorded and processed to try to obtain the decryption key. It would take at least several seconds, more likely several minutes, to work out the decryption key. Once that has been done, recorded data can be retrospectively decrypted, and the rest of the intercepted data can be decrypted on the fly in real time.

A typical attack consists in three steps, these steps comprising, at least:
- The pre-analysis of the data base, wherein the hackers preprocess the information needed to decode A5/1 with limited resources.
- With a RF monitoring system the hackers collect radio information.
- Using the preprocessed data, hackers claim that they can attack A5.1 with a low cost FPGA based system.
If the attacker wants to intercept a specific user, hacking system complexity will be reduced if mobile identity is known before call is initiated. Otherwise the attacker must store all the information sent in the network and make an analysis afterwards.

A stronger encryption algorithm exists, but is not currently deployed. It would be very expensive to deploy it, and would take some time, as terminals and network equipment would need to be re-designed. In the meantime it would be advantageous to give GSM users better protection against eavesdropping.

The present invention seeks to reduce the likelihood of successful eavesdropping of communications between a device and a telecommunications network node without requiring amendment to the encryption algorithm used.

According to a first aspect of the present invention, there is provided a method for improving the security in a telecommunication network as defined in claim 1.

According to a second aspect of the present invention, there is provided a telecommunication system as defined in claim 4.

A first arrangement provides a method of providing security in communications between a device and a telecommunications network node, the method including encrypting a communication session transmitted on a first channel using a key, and causing the communication session to change to a second, different communication channel at a predetermined time.

The embodiments to be described in more detail below provide a number of ways of changing the behaviour of network equipment to make eavesdropping harder (especially eavesdropping on a specific target).

In one example the telecommunications network node is the node of a GSM telecommunications network which operates using the AS/1 encryption algorithm. In this example the device is a mobile telecommunications terminal that communicates wirelessly with the telecommunications network node using GSM protocols. However, it should be understood that this is only one example of an arrangement to which the invention is applicable. Other arrangements to which the invention is applicable include UMTS (3G) cellular telecommunications networks, SAE/LTE (4G) cellular telecommunications networks, and other types of telecommunications network including non- cellular telecommunications networks that communicate using both wireless and non-wireless transmission. The embodiments make it more difficult for an attacker to identify and extract a key used to encrypt a communication session - irrespective of the communication medium - and the invention therefore has broad application.

The communication channel may comprise a time slot. frequency band and/or frequency hopping sequence for GSM, and also other possible senses such as code for CDMA.

In one embodiment to be described, the method of providing security further includes the step of causing the communication session to change to a third communication channel (different from the second communication channel) at a predetermined time. In this embodiment, very quickly after starting to use a new cipher key in the first channel, a command to assign the call to a new (second) traffic channel/frequency is issued, and then, again very quickly, another command to reassign the call to another new (third) traffic channel/frequency is issued. With limited resources, the attacker cannot record all traffic channels and frequencies - only selected ones. By the time the attacker has found the decryption key, and read the first assignment command that switches the communication session to the second channel, they have missed the second assignment command that switches the communication session to the third channel - so now the attacker does not know which traffic channel/frequency the call is on, and cannot easily intercept it.

In a second embodiment the method includes encrypting the communication session using a second key (different from the first-mentioned key) after causing the communication session to change to the second communication channel and at a predetermined time. In this embodiment very quickly after starting to use a new cipher key, a command to assign the call to a new (second) traffic channel/frequency is issued; then, again very quickly, a sequence of commands that will cause a new (second) cipher key to be generated and used are issued. The attacker will miss the second (for example, in GSM, "Cipher Mode Complete") command, which may be (and in GSM is) the most readily available source of "known plaintext" on which to base the cryptanalysis. Cryptanalysis of the remainder of the call, by recovering the second cipher key, becomes harder.

According to a second arrangement, there is provided a method of providing security in communications between a device and a telecommunications network node, the method including encrypting a communication session transmitted on a first channel using a key, performing a first change to the communication session carrier by causing the communication session to change to a second communication channel at a predetermined time, and performing a second change to the communication session carrier at a predetermined time different from the first-mentioned predetermined time.

The second change to the carrier may cause the communication session to change to a third communication channel at a predetermined time. The second change to the carrier may alternatively or additionally include encrypting the communication session using a second key after causing the communication session to change to the second communication channel and at a predetermined time different from said first- mentioned predetermined time.

If the key is obtainable by an attacker after an initial phase of analysing a channel carrying the communication session, the second change to the carrier is advantageously performed before the initial phase of analysing the channel can be completed. The second change to the carrier cannot be identified by the attacker because it occurs before the attacker has derived the key and therefore before the attacker is able to interpret a message transmitted on the first channel to instruct the performance of the change to the second channel. Although the attacker may be able to retrospectively identify the command sent in the first channel to change the communication session to the second channel, this will not be completed until after the second change to the carrier is performed. If the second channel is only monitored after the second change to the carrier is performed, the attacker will not be monitoring the second channel at the time during which the instruction sent on the second channel to perform the second change to the carrier is sent, and therefore cannot be interpreted by the attacker even though the key is known.

According to a third arrangement, there is provided a telecommunications system including a device, a telecommunications network node, means for encrypting a communication session between the device and the node transmitted on a first channel using a key, means for performing a first change to the communication session carrier by causing the communication session to change to a second communication channel at a predetermined time, and means for performing a second change to the communication session carrier at a predetermined time.

According to a fourth arrangement, there is provided a base station for transmitting communications relating to a communication session to a device on a first channel, the communication session being encrypted using a key, the base station being adapted to perform a first change to the communication session carrier by causing the communication session to change to a second communication channel at a predetermined time, and being adapted to perform a second change to the communication session carrier at a predetermined time.

Advantageously, frequency hopping is performed during the communication session over a wide range of frequencies. For example, in GSM, it is advantageous to avoid assigning to (a frequency hopping set that includes) the BCCH carrier, which operates at high transmission power and is particularly easy to intercept.

The method may further include modifying conventional plaintext messages sent during the communication session, for example, in GSM to replace the current completely predictable padding bytes in certain messages with random data.

For a better understanding of the present invention embodiments will now be described by way of example, with reference to the accompanying drawings, in which:
Figure 1 is a diagrammatic drawing of key elements of a mobile/cellular telecommunications system for use in explaining the operation of such a system and the embodiments of the invention;
Figure 2 shows the messages transmitted and the channel changes in a communication session;
Figure 3 shows the messages transmitted and the channel changes;
Figure 4 shows a ciphered message structure in GSM protocol; and
Figure 5 shows an implementation of a combination of countermeasures for call tracking.

In the drawings like elements are generally designated with the same reference sign.

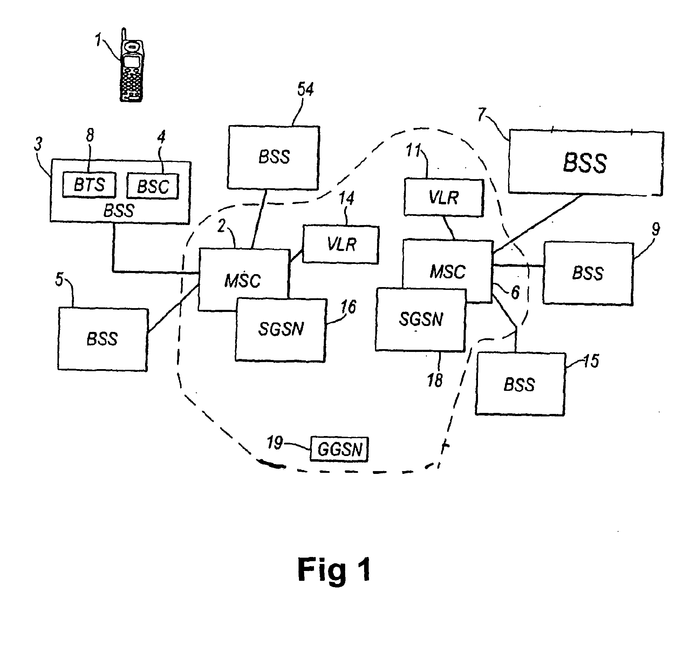

Key elements of a mobile/cellular telecommunications system, and its operation, will now briefly be described with reference to Figure 1.

Each base station (BS) corresponds to a respective cell of its cellular or mobile telecommunications network and receives calls/data from and transmits calls/data to a mobile terminal in that cell by wireless radio communication in one or both of the circuit switched or packet switched domains. Such a subscriber's mobile terminal (or User Equipment-UE) is shown at 1. The mobile terminal may be a handheld mobile telephone, a personal digital assistant (PDA), a laptop computer equipped with a datacard, or a laptop computer with an embedded chipset containing the mobile terminal's functionality.

In a GSM (2G) mobile telecommunications network, each base station subsystem (BSS) 3 comprises one or more base transceiver stations (BTS) 8 and a base station controller (BSC) 4. A BSC may control more than one BTS. The BTSs and BSCs comprise the GSM radio access network (RAN).

Conventionally, the base stations are arranged in groups and each group of base stations is controlled by one mobile switching centre (MSC), such as MSC 2 for base stations in BSSs 3, 54 and 5. As shown in Figure 1 , the network has another MSC 6, which is controlling a further three BSSs 7, 9 and 15. In practice, the network will incorporate many more MSCs and base stations than shown in Figure 1.

Each subscriber to the network is provided with a smart card or SIM which, when associated with the user's mobile terminal, identifies the subscriber to the network. The SIM card is pre-programmed with a unique identification number, the "International Mobile Subscriber Identity" (IMSI) which is not visible on the card and is not known to the subscriber, and also a unique key, Ki. The subscriber is issued with a publicly known number, that is, the subscriber's telephone number, by means of which calls to the subscriber are initiated by callers. This number is the MSISDN.

The network includes a home location register (HLR)/home subscriber server (HSS) 10 which, for each subscriber to the network, stores the IMSI and the corresponding MSISDN together with other subscriber data, such as the current or last known MSC of the subscriber's mobile terminal. The HSS is the master database for the network, and while logically it is viewed as one entity, in practice it will be made up of several physical databases. The HSS holds variables and identities for the support, establishment and maintenance of calls and sessions made by subscribers.

When the subscriber wishes to activate their mobile terminal in a network (so that it may make or receive calls subsequently), the subscriber places their SIM card in a card reader associated with the mobile terminal (terminal 1 in this example). The mobile terminal 1 then transmits the IMSI (read from the card) to the BTS 8 associated with the particular cell in which the terminal 1 is located. The BTS 8 then transmits this IMSI to the MSC 2 with which the BSS 3 is associated.

MSC 2 now accesses the appropriate HLR/HSS 10 and extracts the corresponding subscriber MSISDN and other subscriber data from the appropriate storage location, and stores it temporarily in a location in a visitor location register (VLR) 14. In this way, therefore the particular subscriber is effectively registered with a particular MSC (MSC 2), and the subscriber's information is temporarily stored in the VLR (VLR 14) associated with that MSC. The information stored on the VLR 14 includes a Temporary Mobile Subscriber Identification (TMSI) number for identification purposes for the terminal within the MSC 2. The TMSI number is an identification number that is typically 32 bits in length. In conventional systems, therefore, the TMSI number is not allocated to more than one user of a given system served by that MSC at one time. Consequently, the TMSI number is usually invalidated when the mobile station crosses into a new location served by a different MSC.

When the HLR 10 is interrogated by the MSC 2 in the manner described above, the HLR 10 additionally causes an authentication procedure to be performed on the mobile terminal 1. The HLR 10 transmits an authentication request comprising the subscriber identity (IMSI) to an AUC (authentication centre) for deriving authentication vectors (AVs). Based on the IMSI, the AUC generates a challenge, which is a random number, or obtains a stored challenge based on the IMSI. Also, the AUC generates an XRES (expected result), based on the challenge and a secret shared with the SIM, or obtains an XRES stored with the challenge. The XRES is used to finalise the authentication.

The authentication data and XRES, are then transmitted to the MSC 2, which transmits the authentication challenge to the mobile telephone 1. The mobile telephone 1 generates a response by transmitting the authentication data to the SIM of the mobile telephone 1. The SIM generates, based on the Ki of the subscription stored on the SIM and the authentication challenge, a response corresponding to the XRES stored in the server.

For finalising the authentication according to SIM authentication the MSC 2 compares the response value with the value of the stored XRES for authentication control.

If the response from the mobile terminal 1 is as expected, the mobile terminal 1 is deemed authenticated. At this point the MSC 2 requests subscription data from the HLR 10. The HLR 10 then passes the subscription data to the VLR 14.

As part of the authentication process a cipher key Kc for encrypting user and signalling data on the radio path is also established. This procedure is called cipher key setting. The key is computed by the mobile terminal 1 using a one way function under control of the key Ki and is pre-computed for the network by the AUC. Thus at the end of a successful authentication exchange both parties possess a fresh cipher key Kc.

The authentication process will conventionally be repeated while the mobile terminal 1 remains activated and can also be repeated each time the mobile terminal makes or receives a call, if required. Each time the authentication process is performed a new Kc is generated and provided to the terminal 1 and the BSS 3.

Each of the MSCs of the network (MSC 2 and MSC 6) has a respective VLR (14 and 11) associated with it and operates in the same way as already described when a subscriber activates a mobile terminal in one of the cells corresponding to one of the base stations controlled by that MSC.

The MSCs 2 and 6 support communications in the circuit switched (CS) domain - typically voice calls. Corresponding SGSNs 16 and 18 are provided to support communications in the packet switched (PS) domain - such as GPRS (or 2.5G) data transmissions. The SGSNs 16 and 18 function in an analogous way to the MSCs 2 and 6. The SGSNs 16, 18 are equipped with an equivalent to the VLR for the packet switched domain. GGSN 19 provides IP connectivity to the internet and/or private intranets.

In the CS domain, for example, when the subscriber using mobile terminal 1 wishes to make a call, having already inserted the SIM card into the reader associated with his mobile terminal and the SIM has been authenticated in the manner described, a call may be made by entering the telephone number of the called party in the usual way. This information is received by the BSS 3 and passed on to the MSC 2.

Call related information needs to be transported from the mobile terminal 1 to the (MSC 2). This requires the establishment of a Radio Resource (RR) connection to MSC 2. The first phase of the call setup sets up this RR connection. RR connection establishment is triggered by sending a Channel Request message. This message requests the BSS 3 to allocate radio resources for the RR connection setup. The terminal 1 then waits for an assignment on an Access Grant Channel (AGCH).

The BSS 3 allocates a Traffic Channel (TCH) to the terminal 1. GSM uses physical channels. Each of those physical channels is divided into 8 time slots. One user consumes one slot, thus allowing 8 users to be on a GSM physical channel simultaneously. Each GSM physical channel is 200 kHz wide. The traffic channel allocation assigns a specific frequency and a timeslot on that frequency. Conventionally, the BSS 3 will allocate a traffic channel to make best use of the radio capacity available. Conventionally, the traffic channel allocated to a terminal 1 may be changed by the BSS 3 when the radio conditions/availability change. After the terminal 1 receives this traffic channel allocation information, the terminal 1 only uses the specified resources for communication session with the mobile network. However, in many conventional GSM networks frequency hopping is employed to reduce the effects of interference on any particular communication session. Frequency hopping consists in changing the frequency of the traffic channel in every transmitted burst (217 hops per second), providing frequency diversity and interference averaging. This randomises the risk of interference. If frequency hopping is employed, the base station 3 broadcasts the frequency sequence to be used on each traffic channel. The terminal 1 receives this information and uses it to synchronise its frequency hopping with that of the base station.

The MSC 2 next checks if the user of terminal 1 has been authenticated. As the user has already been authenticated by the authentication process described above, the authentication procedure does not need to be performed again.

After the subscriber has been successfully authenticated, the MSC 2 initiates ciphering of the data being sent on the channel using the new Kc established during the authentication process. The channel is ciphered using A5/1 so as so protect the call from eavesdropping. To initiate ciphering, the MSC 2 triggers the BSS 3 to send a "Cipher mode Command" message to the terminal 1, and the terminal 1 acknowledges this with a "Cipher mode Complete" message.

At this point RR connection establishment has been completed between the mobile terminal 1 and the MSC 2. The BSS 3 then acts as a conduit for transporting the signaling messages between the mobile terminal 1 and the MSC 2. The MSC 2 routes the calls towards the called party via the MSC 2. By means of the information held in the VLR 14, MSC 2 can associate the call with a particular subscriber and thus record information for charging purposes.

What has been described thus far is conventional.

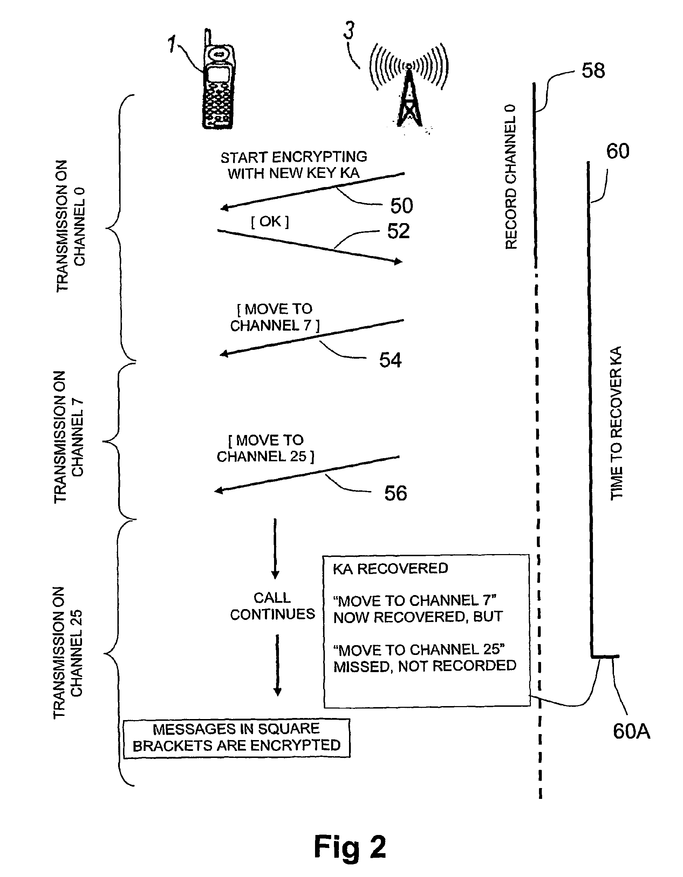

A first arrangement will now be described with reference to Figure 2 which shows the messages being transmitted between mobile terminal 1 and base station 3.

To establish a communication session between the base station 3 and the mobile terminal 1, the base station 3 initially allocates a traffic channel to the communication session (channel "0" in this example) in the conventional way - that is, based on the current radio conditions and capacity. The communication session using a newly established cipher key (Kc) "KA" is established by message 50 sent from base station 3 to mobile terminal 1. Mobile terminal 1 acknowledges the establishment of the encrypted communication session by sending message "OK" 52 to the base station 3.

The base station 3 then very quickly (at a first predetermined time) issues message "MOVE TO CHANNEL 7" 54 to instruct the mobile terminal 1 to move to a different traffic channel, channel "7" in this example. The same cipher key "KA" is used for the communication session on traffic channel "7" as on traffic channel "0".

After the communication session has moved to traffic channel "7", the base station 3 then very quickly (at a second predetermined time) issues "MOVE TO CHANNEL 25" message 56 to the mobile terminal 1 to instruct the mobile terminal 1 to move to another different traffic channel, channel "25" in this example. The encrypted communication session is then continued in the conventional way. The same cipher key "KA" is used for the communication session on traffic channel "25" as on traffic channel "7".

As mentioned above, known attempts to eavesdrop on A5/1-encrypted GSM communication sessions cannot be performed in real time but require an initial period where encrypted data recorded (indicated at 58) on the traffic channel must be processed to try to obtain the cipher key. This initial period is likely to be between several seconds and several minutes. The processing phase of the initial period is indicated at 60 in Figure 2.

An attacker monitoring transmission channel "0" may be able to record data including messages 50, 52 and 54 of the communication session between the mobile terminal 1 and base station 3 during the recording phase 58. The cryptanalytic process performed by the attacker may start as soon as the first encrypted data are sent - which would usually be the start of the first "OK" message 52. The first and second predetermined times may be determined relative to the "OK" message 52.

Following completion of the processing phase 60 (at 60A), the attacker may have identified the cipher key KA used in the communication session. However, as can be seen in Figure 2, by the time the cipher key KA has been obtained at 60A, the communication session is occurring on traffic channel "25". By obtaining the cipher key KA the attacker will be able to retrospectively decrypt the "MOVE TO CHANNEL 7" message 54 that was transmitted on channel "0". If, in consequence, the attacker then monitors channel 7 (using the cipher key KA to decrypt communications on that channel), the attacker would not be able to identify and decrypt further communications between the mobile terminal 1 and the base station 3 because the communication session has since moved to traffic channel "25". Provided that the attacker does not continuously always monitor traffic channel "0" and traffic channel "7", the attacker will be unable to identify on which transmission channel the communication session is now occurring because the "MOVE TO CHANNEL 25" message 56 was transmitted during the initial period (comprising recording phase 58 and processing phase 60) before the cipher key KA was obtained and therefore before the attacker could determine that channel "7" should be monitored to continue eavesdropping on the communication session. In this regard, it should be noted that it is less likely that an attacker will be able to record all traffic channels continuously because this would require significant resources; rather, it is more likely that an attacker will only monitor selected traffic channels.

As mentioned above, a traffic channel, for example traffic channel "0", "7" or "25", if frequency hopping is employed, is a known sequence of transmission frequencies and time slots between which the base station 3 and the mobile terminal 1 switch during the communication session. Both the base station 3 and the mobile terminal 1 know this sequence of frequencies and time slots used, so that they can synchronise movement between the frequencies and time slots during the communication session so that data are not lost.

In an enhancement of this first arrangement, frequency hopping is performed over the widest possible set of frequencies in order to make it more difficult for an attacker to identify communications relating to a particular communication session. Advantageously, the base station 3 avoids assigning a frequency hopping set that includes the Broadcasting Control Channel (BCCH) carrier which operates at high transmission power and is particularly easy to intercept.

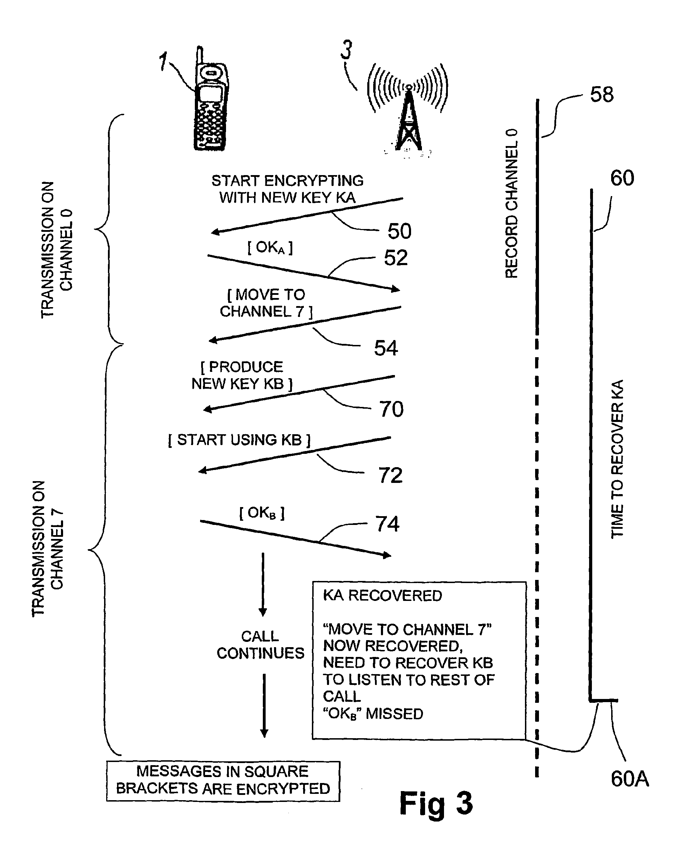

A second arrangement is shown in Figure 3.

As in the first arrangement, to establish a communication session between the base station 3 and the mobile terminal 1 , the base station 3 allocates a traffic channel to the communication session (channel "0", in this example) in the conventional way - that is, based on the current radio conditions and capacity. The communication session using a newly established cipher key (Kc) "KA" is established by message 50 sent from base station 3 to mobile terminal 1. Mobile terminal 1 acknowledges the establishment of the encrypted communication session by sending message "OKA" 52 to the base station 3.

The base station 3 then very quickly issues message "MOVE TO CHANNEL 7" 54 to instruct the mobile terminal 1 to move to a different traffic channel, channel "7" in this example. The same cipher key "KA" is used for the communication session on traffic channel "7" as on traffic channel "0".

In this arrangement, however, very quickly after the communication session is moved to transmission channel "7" a "PRODUCE NEW KEY KB" message 70 message is transmitted from the base station 3 to the mobile terminal 1 , which establishes a new cipher key KB at the terminal 1 and base station 3 for encrypting the communication session between the base station 3 and the mobile terminal 1. The base station 3 then transmits "START USING KB" message 72 to the mobile terminal 1. The mobile terminal 1 acknowledges the instruction in message 72 by sending "OKB" message 74 in reply to the base station 3. The communication session then continues in transmission channel "7" encrypted by cipher key "KB".

To establish the new cipher key KB a "Cipher Mode Complete" command is sent in message 70. In GSM the Cipher Mode Complete command is the most readily available source of known plaintext on which an attacker could perform cryptanalysis.

If the attacker which records transmission channel "0" during the recording phase 58 is able to obtain the cipher key "A" used during the communication session on transmission channel "0" after performing cryptanalysis during the processing phase 60, the attacker will also be able to retrospectively decipher the encrypted "MOVE TO CHANNEL 7" message 54 that was transmitted in channel "0". However, assuming that the attacker is not also continually monitoring transmission channel "7", the attacker will not be able to record and analyse initial communications, including message 70, transmitted immediately after the communication session moves to transmission channel "7", because the "PRODUCE NEW KEY KB" message 70 was transmitted during the initial period (comprising recording phase 58 and processing phase 60) before the cipher key KA was obtained and therefore before the attacker could determine that channel "7" should be monitored to continue eavesdropping on the communication session.. The attacker will therefore not have access to the message 70 (which includes the relatively easy to decipher plaintext Cipher Mode Complete command). The information gained by the attacker by the recording phase 58 and processing phase 60 in relation to channel "0" will therefore not allow the attacker to subsequently decrypt communications between the base station 3 and the mobile terminal 1 on transmission channel "7" as the attacker will not be able to identify the new cipher key KB. Of course, the attacker could obtain the new cipher key KB by starting the cryptanalysis process again on channel "7" but there would be a delay until the recording phase 58 and processing phase 60 were completed for channel "7".

The "MOVE TO CHANNEL 7" message 54 is transmitted between the base station 3 and the mobile terminal 1 within a predetermined time from transmission of the "OK" manage 52, for example. The "PRODUCE NEW KEY KB" message 70 is transmitted between the base station 3 and the mobile terminal 1 within a predetermined time from transmission of the "OK" message 52, for example.

The times at which the messages 54 and 70 are sent are selected such that the message 70 is transmitted to the mobile terminal 1 before the initial decryption process of the attacker has been completed (i.e. before the key KA has been discovered) at time 60A.

The first and second arrangement may be enhanced by modifying the known plaintext messages that are conventionally used. In certain plaintext messages completely predictable padding bytes are included. In an enhancement these completely predictable padding bytes are replaced with random data. For example, the "OK" messages 52 and 74 may be plaintext messages of 32 bytes. The majority of these messages will be predictable padding bytes that do not convey any data. For example, these padding bytes may be all "0"s. An enhancement to the arrangements would replace these "0"s with random data around the "OK" part of the message.

An advantage of the arrangements is that the known GSM protocols used to establish and maintain the communication session between the base station 3 and the mobile terminal 1 are not changed. The mobile terminal 1 does not need to be modified. The algorithm performed by the base station 3 is modified to (in the first arrangement) cause a communication session to move from a first transmission channel ("0") to a second, different, transmission channel ("7") very quickly (at a predetermined time) after establishing the communication session, and then to again very quickly (at a predetermined time) cause the communication session to move from the second transmission channel ("7") to a third, different again, transmission channel ("25").

In the second arrangement, the algorithm of the base station 3 is modifed to cause the communication session to move from the first transmission channel ("0") to the second, different, transmission channel ("7") very quickly (at a predetermined time) after establishing the communication session with cipher key "KA", and then very quickly (at a predetermined time) after the communication session moves to the second traffic channel ("7"), to cause a new, replacement cipher key "KB" to be established between the base station 3 and the mobile terminal 1 for encrypting further communications in the transmission channel 7.

In relation to the first arrangement, it should be appreciated that, in addition to two traffic channel changes that are performed very quickly, further traffic channel changes may be performed very quickly.

In relation to the second arrangement, it should be appreciated that, in addition to producing a new cipher key KB very quickly after the communication session moves to the second transmission channel ("7"), a further new cipher key may be established on movement of the communication session to another new transmission channel.

The first and second arrangements may be combined in various ways. For example, the first arrangement may be modified so that when the communication session moves to transmission channel 25, a new cipher key is very quickly established.

In an embodiment of the invention, a combination of countermeasures are implemented in the networks in order to make it more difficult for a hacker to decipher an A5/1 GSM communication, both in signaling phase or in the traffic phase:
- Immediate signaling traffic reallocation, making it more difficult for the hacker to track the call in the signaling phase, which is the most useful one for the hacker. When a user sends the first ciphered message, the network will immediately send a request to perform a handover to another channel, which will not be known by the attacker.
- Reduction of amount of information that can be predicted by the hacker. Different techniques will be used depending on the direction of the messages (uplink or downlink).
- Intelligent periodic traffic reallocation after signaling phase through intracell handovers and HCS (hierarchical cell structure) will be performed in order to avoid call tracking by the hacker, even if all frequencies are monitored. The hacker will not be able to collect enough information to perform an attack based on traffic channels. This, jointly with the previous solutions, would deter/avoid the eavesdropping even if the hacker is able to record all frequencies/channels.

These countermeasures complement and enhance the measures described in the foregoing arrangements:
- They provide a protection not only during traffic phase but also during signalling phase
- They provide a protection during traffic phase even if the hacker is able to record all frequencies / channels.

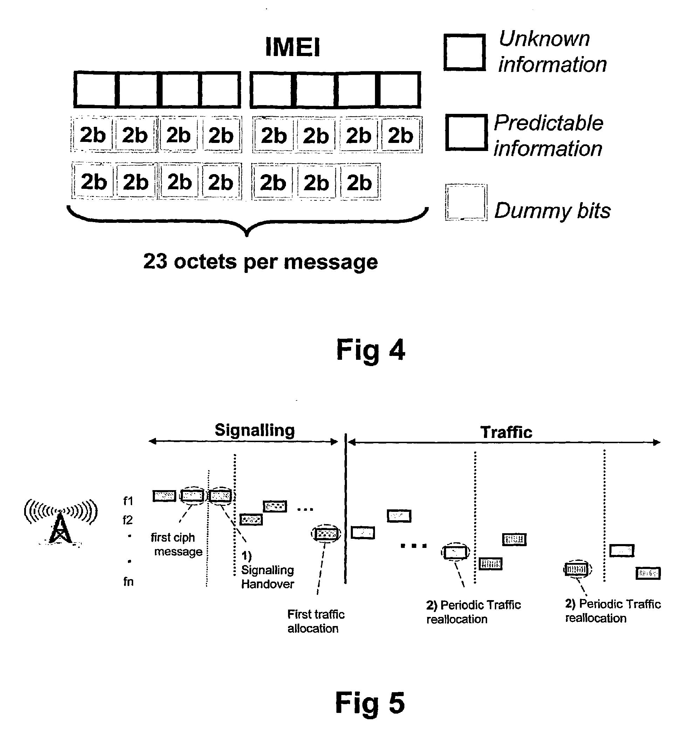

The one of the techniques used in combination with the earlier-described countermeasures against attacks on the A5/1 GSM ciphering protocol comprises:
the reduction of predictable information, in order to reduce the amount of known information available to the hacker, thus increasing the number of messages/calls time recorded needed by the hacker in order to decipher A5/1 key. This may be effected by doing one or more of the following: randomizing dummy bits sent in any message in the GSM air interface; and increasing the optional information carried in such messages (even when that information is not strictly necessary). In either case the principal is to increase the difficulty of guessing the contents of a particular message and thereby evincing a "crib" in the preprocessing stage of any cryptoattack based on call set up plain text. Plain text including two types of information that can be used by the hacker (figure 4): dummy bits (10) that the bits with pre-defined values reserved for future applications by the protocol; and predictable information (11) included in the message, e.g. protocol fixed information, IMEI number etc..

Another technique for call tracking may also be used as shown in figure 5, in this technique one or more of the following methods is adopted: a method for signaling handover (21), where right after the first ciphered message is received in the network, while still in the signaling phase, the user will be reallocated to another channel, either on the same or another cell while the uncertainty will increase if it is done to another cell; and/or a method for periodic traffic reallocations (22), which is possible through forced periodic intra-cell handovers, immediate assignment would also be helpful, but optional. This method will be useful if the attacker has not captured enough SDCCH information to decode the A5/1 key in the beginning of the call. In either case, the effect of this countermeasure will highly depend on the amount of messages needed to crack the A5/1 ciphering protocol, the earlier mentioned technique for reducing the available plaintext "cribs" aims to make this amount as big as possible, hence there is a multiplicative effect on the combination of different countermeasures

In the prior art, during a communication session, the traffic channel may be changed but this would always be in dependence upon the radio characteristics and capacity. In the embodiments of the present invention, the transmission channel may also be changed at a predetermined time.

Conventionally, a new cipher key is established when mobile terminal 1 is activated in the network and at other arbitrary times such as when a new communication session is established. In contrast, the second arrangement, a new cipher key is used during a communication session at a predetermined time.

The embodiments describe a CS call. However, it should be appreciated that the invention is also applicable to other types of communication session, such as a PS communication session.

## Claims

1. A method for improving security in a telecommunication network, **characterized in that** the method comprises, at least:
(A) a first method for the reduction of predictable information in the signaling traffic at the beginning of a call, the first method comprising:
- randomizing of the dummy bits included in the call; and/or
- increasing the optional information in the call; and
(B) a second method for making call tracking difficult, the second method comprising:
- performing signaling handover; and/or
- performing periodic traffic reallocations.

2. A method of claim 1 **characterized in that** the signaling handover (1) includes, where right after the first ciphered message, while still in the signaling phase, the call is reallocated to another signaling channel; and/or the periodic traffic reallocations (2) include forced periodic intra-cell handovers.

3. A method of claims 1 or 2 **characterized in that** in the signaling handover (1) the call will be reallocated to another signaling channel, either on the same or another cell, while the uncertainty will increase if it is done to another cell.

4. A telecommunication system including a device (1) and a telecommunications network node (3), and **characterized in that** the system further comprises, at least:
- means for the reduction of predictable information in the signaling traffic at the beginning of a call, further comprising:
- means for the randomization of the dummy bits included in the call; and/or
- means for increasing the optional information in the call;
- means for making call tracking difficult, and further comprising:
- means for the signaling handover; and/or
- means for periodic traffic reallocations.

5. The telecommunications system of claim 4, wherein the means for signalling handover is operable, where right after the first ciphered message, whilst still in the signalling phase, to reallocate the call to another signalling channel; and/or the means for periodic traffic reallocation is operable to perform forced periodic intra-cell handovers.

6. The telecommunications system of claim 4 or 5, wherein the means for performing the signalling handover is operable to reallocate the call to another signalling channel, either on the same or another cell.

## Patentansprüche

1. Verfahren zum Verbessern der Sicherheit in einem Telekommunikationsnetzwerk, **dadurch gekennzeichnet, dass** das Verfahren wenigstens Folgendes beinhaltet:
(A) ein erstes Verfahren zum Reduzieren von vorhersagbaren Informationen im Signalverkehr zu Beginn eines Rufs, wobei das erste Verfahren Folgendes beinhaltet:
- Randomisieren der in dem Ruf enthaltenen Dummy-Bits; und/öder
- Erhöhen der optionalen Informationen in dem Ruf; und
(B) ein zweites Verfahren zum Erschweren der Rufverfolgung, wobei das zweite Verfahren Folgendes beinhaltet:
- Ausführen einer Signalisierungsübergabe; und/oder
- Ausführen von periodischen Verkehrsneuzuweisungen.

2. Verfahren nach Anspruch 1, **dadurch gekennzeichnet, dass** die Signalisierungsübergabe (1) beinhaltet, unmittelbar nach der ersten verschlüsselten Nachricht, immer noch in der Signalisierungsphase, dass der Ruf einem anderen Signalisierungskanal neu zugewiesen wird; und/oder die periodischen Verkehrsneuzuweisungen (2) erzwungene periodische Intra-Zellen-Übergaben beinhalten.

3. Verfahren nach Anspruch 1 oder 2, **dadurch gekennzeichnet, dass** der Ruf in der Signalisierungsübergabe (1) einem anderen Signalisierungskanal entweder in derselben oder in einer anderen Zelle neu zugewiesen wird, während die Unsicherheit zunimmt, wenn dies auf eine andere Zelle erfolgt.

4. Telekommunikationssystem mit einem Gerät (1) und einem Telekommunikationsnetzwerkknoten (3), und **dadurch gekennzeichnet, dass** das System ferner wenigstens Folgendes umfasst:
- Mittel zum Reduzieren von vorhersagbaren Informationen im Signalisierungsverkehr zu Beginn eines Rufs, das ferner Folgendes umfasst:
- Mittel zum Randomisieren der in dem Ruf enthaltenen Dummy-Bits; und/oder
- Mittel zum Erhöhen der optionalen Informationen in dem Ruf;
- Mittel zum Erschweren der Rufverfolgung, und das ferner Folgendes umfasst:
- Mittel für die Signalisierungsübergabe; und/oder
- Mittel für periodische Vekehrsneuzuweisungen.

5. Telekommunikationssystem nach Anspruch 4, wobei das Mittel für eine Signalisierungsübergabe die Aufgabe hat, unmittelbar nach der ersten verschlüsselten Nachricht, immer noch in der Signalisierungsphase, den Ruf einem anderen Signalisierungskanal neu zuzuweisen; und/oder das Mittel zur periodischen Verkehrsneuzuweisung die Aufgabe hat, erzwungene periodische Intra-Zellen-Übergaben durchzuführen.

6. Telekommunikationssystem nach Anspruch 4 oder 5, wobei das Mittel zum Durchführen der Signalisierungsübergabe die Aufgabe hat, den Ruf einem anderen Signalisierungskanal entweder in derselben oder in einer anderen Zelle neu zuzuweisen.

## Revendications

1. Procédé d'amélioration de la sécurité dans un réseau de télécommunications, **caractérisé en ce que** le procédé comprend au moins:
(A) un premier procédé destiné à réduire des informations prévisibles dans le trafic de signalisation au commencement d'un appel, le premier procédé comprenant :
- une randomisation des bits fictifs inclus dans l'appel ; et/ou
- une augmentation des informations facultatives dans l'appel ; et
(B) un deuxième procédé destiné à rendre difficile le suivi des appels, le deuxième procédé comprenant :
- la réalisation d'un transfert de signalisation ; et/ou
- la réalisation de ré-attributions périodiques du trafic.

2. Procédé selon la revendication 1, **caractérisé en ce que** le transfert de signalisation (1) inclut, au moment qui suit immédiatement le premier message crypté, tout en étant encore dans la phase de signalisation, l'opération consistant à ré-attribuer l'appel à un autre canal de signalisation ; et/ou les ré-attributions périodiques du trafic (2) inclut des transferts intracellulaires forcés à intervalles périodiques.

3. Procédé selon la revendication 1 ou 2, **caractérisé en ce que** lors du transfert de signalisation (1) l'appel sera ré-attribué à un autre canal de signalisation, soit sur la même cellule soit une autre, cellule, pendant que l'incertitude va augmenter quant à savoir si cette opération est faite vers une autre cellule.

4. Système de télécommunications incluant un dispositif (1) et un noeud de réseau de télécommunications (3), et **caractérisé en ce que** le système comprend en outre, au moins :
- des moyens destinés à réduire des informations prévisibles dans le trafic de signalisation au commencement d'un appel, comprenant en outre :
- des moyens pour la randomisation des bits fictifs inclus dans l'appel ; et/ou
- des moyens pour augmenter les informations facultatives dans l'appel ;
- des moyens pour rendre difficile le suivi des appels, et comprenant en outre :
- des moyens pour le transfert de signalisation ; et/ou
- des moyens pour des ré-attributions périodiques du trafic.

5. Système de télécommunications selon la revendication 4, au moment qui suit immédiatement le premier message crypté, tout en étant encore dans la phase de signalisation, les moyens pour le transfert de signalisation étant exploitables de façon à ré-attribuer l'appel à un autre canal de signalisation ; et/ou les moyens pour la réattribution périodique du trafic étant exploitables de façon à réaliser des transferts intracellulaires forcés à intervalles périodiques.

6. Système de télécommunications selon la revendication 4 ou 5, les moyens pour réaliser le transfert de signalisation étant exploitables de façon à ré-attribuer l'appel à un autre canal de signalisation, soit sur la même cellule soit sur une autre cellule.
